# EUROPEAN PATENT APPLICATION

(11) **EP 3 654 265 A1**
(43) Date of publication of application: **20.05.2020**
(21) Application number: 19205777.6
(22) Date of filing: 29.10.2019
(51) Int. Cl.: G06Q 30/00, G10L 15/00, H04L 29/06

(54) **VOICE NOTES FRAUD DETECTION**

(30) Priority: 19.11.2018 US 201816194515
(71) Applicant: Olx Global B.V., 2132 LS Hoofddorp (NL)
(72) Inventor: BALLOT, Johan Stephen Simeon, 10435 Berlin (DE)
(74) Representative: Müller-Boré & Partner Patentanwälte PartG mbB

(57) **Abstract**

Provided are systems and methods for detecting fraud via a chat application. In one example embodiment, the method may include receiving a file comprising text that has been transcribed based on speech input via an application executing on a user device, determining whether the speech comprises fraudulent content based on the text within the file that has been transcribed from the speech, where the determining is performed based on previous transcribed speech that has been determined as fraudulent content, and in response to determining that the speech comprises fraudulent content, transmitting a notification to the application indicating the fraudulent content. The user that provided the fraudulent content may be blocked from further interacting via the chat application.

## Description

### BACKGROUND

Owners of second-hand goods have the option to sell their used items through online forums such as commerce-based websites and mobile applications. For example, a seller can post a second-hand item via an online marketplace which enables a bargained for exchange of items via the Internet. The posted item may include images of the item, a description of the item, reviews of the seller by other buyers with previous dealings, request for bids on the item, contact information of the seller, and the like. The content of the post can be viewed by potential buyers who can bid or even request to purchase the item. In many cases, the online forum may facilitate the bargaining or other communication between the seller and the buyer through various options, including an in-app chat window, a text message conversation, push notifications, an email exchange, audio (e.g., phone call, etc.) or simply letting the buyer and seller list their email address and/or phone number information.

One drawback of purchasing second-hand items is the risk of fraud. For example, fraud may occur when the seller obtains sensitive payment information of the buyer and uses the payment information in an unauthorized manner or does not provide the promised product. Meanwhile, the seller may provide a falsified payment mechanism or may receive the items without making a payment. Another problem for online forums is the anonymity of users. It is difficult for an online forum to verify the identity of each user and the authenticity of the second-hand items other than through indirect means such as contact information (e.g., email, phone number, etc.) or prior dealings, although this information can be forged and/or may be impossible to verify.

### BRIEF DESCRIPTION OF THE DRAWINGS

Features and advantages of the example embodiments, and the manner in which the same are accomplished, will become more readily apparent with reference to the following detailed description taken in conjunction with the accompanying drawings.
FIG. 1 is a diagram illustrating chat communication system implemented via a host platform, in accordance with an example embodiment.
FIG. 2 is a diagram illustrating a chat application interaction with voice notes in accordance with an example embodiment.
FIG. 3 is a diagram illustrating a fraud detection process by the host platform in accordance with an example embodiment.
FIG. 4 is a diagram illustrating a fraud detection architecture in accordance with an example embodiment.
FIG. 5 is a diagram illustrating a method for determining that speech input via a chat application includes fraudulent content, in accordance with example embodiments.
FIG. 6 is a diagram illustrating a computing system for performing the methods and processes of the example embodiments.

Throughout the drawings and the detailed description, unless otherwise described, the same drawing reference numerals will be understood to refer to the same elements, features, and structures. The relative size and depiction of these elements may be exaggerated or adjusted for clarity, illustration, and/or convenience.

### DETAILED DESCRIPTION

In the following description, specific details are set forth in order to provide a thorough understanding of the various example embodiments. It should be appreciated that various modifications to the embodiments will be readily apparent to those skilled in the art, and the generic principles defined herein may be applied to other embodiments and applications without departing from the spirit and scope of the disclosure. Moreover, in the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. Thus, the present disclosure is not intended to be limited to the embodiments that is shown but is to be accorded the widest scope consistent with the principles and features disclosed herein.

As the Internet continues to evolve, the selling of second-hand goods via commerce-based websites and mobile applications has become an increasingly popular activity. Users located at different geographical places may interact with each other through a common online forum where sellers place their second-hand items for sale. Interested users can communicate with the seller through email, phone, chat sessions, and the like. More recently, users of online forums and mobile applications have begun communicating through the use of voice notes which provide the user with the ability to construct text messages using speech. Using a chat application or other mechanism, a user may communicate with another user by speaking into their device. The application may transcribe or otherwise convert the speech content into text content and send the text content through the chat application.

A chat application may be implemented within or in association with an online forum such as an online marketplace or a mobile application where items (e.g., second-hand items, etc.) may be exchanged for value. The online forum may be a web-based portal where classified advertisements for the sale of second-hand items may be posted. Through the chat application, users may exchange voice notes which comprise text messages automatically transcribed from speech / audio. When a seller and a buyer have agreed to a price (or other consideration), an exchange may occur. This exchange often happens in-person because it is easier for the buyer and the seller to meet to reduce the costs on shipping and expedite the exchange (same day, etc.).

However, users may be subject to scams or other fraudulent behavior when conducting purchases through an online second-hand item marketplace. Scams include fraud, falsified information, identity theft, and the like. Scams often have certain features which can be used to identify that a scam is being attempted. For example, a scam may include a message from a seller that is not local to an area and that requires payment to be extended without meeting face-to-face. As another example, a scam may include a potential buyer who provides vague initial inquiries about an item that can include poor grammar, spelling, word usage, or the like. As another example, a scam may include a seller who requests the buyer to wire money directly via an escrow service, WESTERN UNION®, PAYPAL®, MONEY GRAM®, money order, or the like. As another example, a scam may include either of the buyer or the seller refusing to meet in person to complete the transaction. As another example, a scam may include claims made that a transaction is guaranteed, or that the buyer/seller is officially certified. As another example, a scam may include an indication that a third party will handle or provide protection for a payment. Another type of scam includes a remote or distant purchase offering a seemingly real (but fake) cashier's check.

The example embodiments illustrate some of the risks of conducting transactions on online forums. According to various embodiments, the system described herein may detect fraudulent content within speech (audio) that is provided through a chat application. For example, the audio may be converted to text and saved as a voice note or other speech-to-text conversion. An unbiased machine learning algorithm may process the text to determine whether content of the speech is fraudulent. The fraud detection may be performed based on other fraudulent messages detected during a sale of an item via a chat application.

According to various embodiments, the machine learning algorithm may be trained on previously identified fraudulent speech and text messages and can intuitively identify speech or other audio as comprising fraudulent content when input and converted into text. While users are communicating with each other through the chat application, the example embodiments may analyze each communication for fraudulent contact. In some cases, the machine learning algorithm can learn from previous messages within the communication session and determine fraud based on a chain of voice messages. When the fraud is detected, several remedial measures can be taken. For example, the offending user (user device, user account, etc.) may be blocked from interacting on the forum.

The example embodiments may be used with a chat application where users speak into a mobile device or other user device and the spoken content is converted into text messages. The chat application may be used in connection with the sale of second-hand items. Accordingly, the algorithms used to detect fraud may be based upon fraud that is implemented within the sale of items via second-hand markets. The algorithms may be trained to detect a scam or other fraud within spoken content based on the speech being converted to text and analyzed. When fraudulent content is detected, the user who submitted the scam can be blocked. The conversion of the speech to text may be necessary for the machine learning algorithm which requires text-based input.

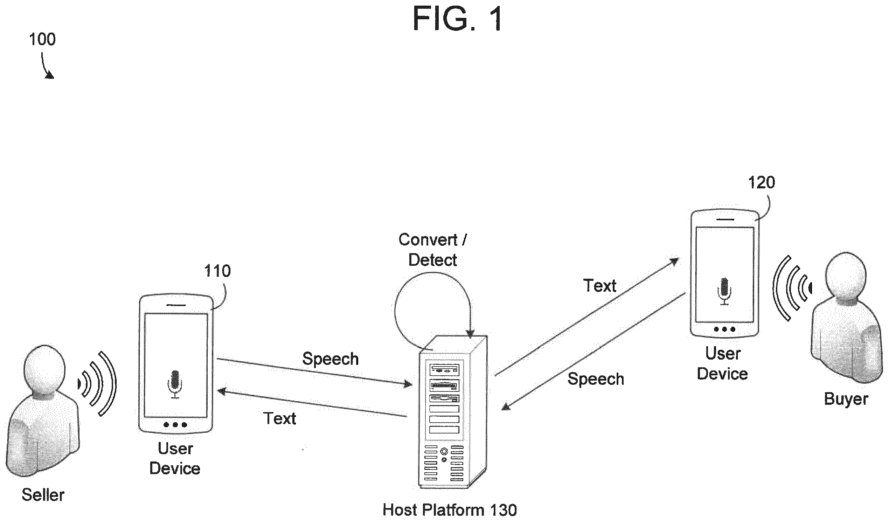

FIG. 1 illustrates a chat communication system 100 implemented via a host platform, in accordance with an example embodiment. Referring to the example of FIG. 1, a communication session between a seller (user device 110) and a buyer (user device 120) is established and performed via a host platform 130. Here, each of the user device 110, the user device 120, and the host platform may be connected to each other through a network such as the Internet, a private network, a cellular network, a radio network, and the like. The user devices 110 and 120 may include mobile device such as mobile phones, tablets, smart-wearables, laptops, and the like. As another example, the user devices 110 and 120 may be more stationary computing devices such as desktop computers, televisions, appliances, servers, and the like.

In this example, the user device 110 and the user device 120 may establish a communication session with one another through the host platform 130. Here, the host platform 130 may host an e-commerce website or mobile application which enables the user devices 110 and 120 to connect to one another and send messages back and forth. Each of the user devices 110 and 120 may include an audio input such as a microphone or the like which enables a user to speak or otherwise create audio. The input audio can be converted to text messages (also referred to herein as voice notes) which can be submitted between the user devices 110 and 120 via a chat window, an email communication, an instant message, or the like. As another example, the audio may be analyzed without being converted to text. In this case, the audio may be captured and stored as an audio file (e.g., .wav, .mp3, etc.) For example, user device 110 may leave an audio file for user device 120.

In an example in which the audio file is converted to text, the user devices 110 and 120 may include software capable of transcribing the input audio into text and storing the text in a file such as a document, word processor file, and the like. As another example, the user devices 110 and 120 may transmit the audio in the form of an audio file to the host platform 130 which may include software for transcribing the received audio file into text and storing the text in a text file or other document. Voice notes provide for benefits over traditional text messages because voice notes can be left without the need to type. Therefore, voice notes can be created quickly and easily in comparison to text messages which require a user to input typed keys to create a message.

However, audio files and voice notes can also be used to conduct fraudulent scams in which one of the users attempts to cheat or otherwise defraud the other user. The speech that is included within an audio file and/or the text content included within voice notes may include attributes which can be used to identify that the speech corresponding thereto refers to fraudulent content, such as the fraudulent sale of a second-hand item, purchase of an item, exchange of payment information, and the like. According to various embodiments, the host platform 130 may receive each communication from both buyer device 110 and seller device 120 during a communication session therebetween and detect whether one of the parties is attempting to defraud the other party based on speech content within an audio file or a transcribed text file. A machine learning algorithm trained on historical fraudulent scams can process each speech portion to determine whether the content represented by the speech is fraudulent or otherwise associated with a scam.

If a scam or other fraudulent behavior is detected by the machine learning algorithm running on the host platform 130, the host platform 130 may block the user device associated with the fraudulent content from continuing to participate within the online forum. In this example, both the buyer device 110 and the seller device 120 may be notified that the conversation has been detected as fraudulent regardless of which user is detected as providing fraudulent content. As another example, when a fraudulent user is detected (e.g., buyer device 110), the host platform 130 may notify the other user (e.g., seller device 120) that the communication session involves fraud. In this example, the host platform 130 may continue to receive content from the fraudulent user (*i.e*., buyer device 110) which allows the machine learning algorithm to continue to learn from the fraud.

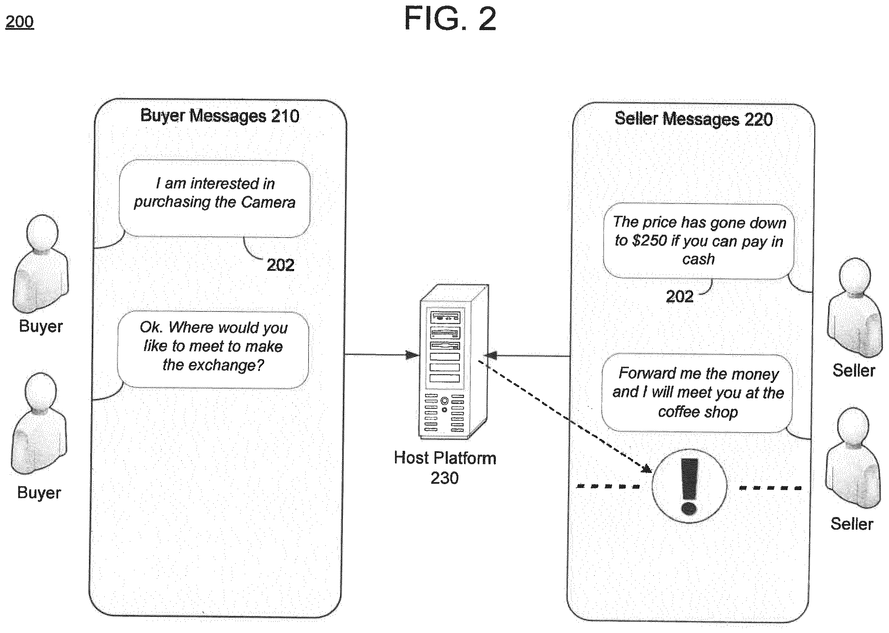

FIG. 2 illustrates a fraud detection process 200 by a host platform 230 in accordance with example embodiments. Referring to the example of FIG. 2, a buyer may speak into a respective device and create text messages shown as buyer messages 210. The buyer messages 210 may be displayed on a user interface of a seller's device. Meanwhile, a seller may speak into the seller device and create text messages shown as seller messages 220. Here, the seller messages 220 may be displayed on a user interface of buyer's device. The speech input by buyer and seller may be transcribed into text and output on a respective screen of the other party's device. In this example, voice notes which include speech transcribed into text are analyzed for fraud. As another example, audio files may be analyzed directly without being converted to text.

Each communication (*i.e.,* voice note 202) may pass through the host platform 230 where it may be analyzed for fraudulent content. The machine learning algorithm may search for specific combination of words based on historical fraudulent content from which the machine learning algorithm has been trained. As an example, the machine learning algorithm may classify the resulting text messages on a sliding scale (*e.g.,* from zero meaning all clear with zero risk to 100 meaning very risky, block immediately, etc.). The algorithm may be unbiased in what it is looking for, but it may be supervised. Accordingly, information about messages that previously auto-detected or otherwise marked manually by human moderators as scams are sent back to the algorithm and where it learns from these confirmed cases of fraud. Accordingly, the algorithm may dynamically change and adapts as it is being fed what is bad and what is good content. Furthermore, parameters such as user loyalty and a user's successful payments may be used to seed the model.

In some embodiments, when the machine learning model detects fraud in content of a message, the software can notify a moderator user via the host platform 230 for confirmation. In this example, the machine learning algorithm may decide intelligently which data to prioritize for sending to the moderators based for example on the uncertainty of the predictions or other metrics. In addition, a random subset of cases may be analyzed and sent to the moderators (unbiased random sampling) in order to evaluate performance, measure concept drift of the underline distributions, etc. of the algorithm over time. For example, the algorithm may support incremental training with sample weights in order to adapt quickly to concept drift.

Referring again to the example of FIG. 2, the machine learning algorithm on the host platform detects fraudulent content from the seller in seller messages 220. Here, the fraud detection may be based on content in only the most recent message or an accumulation of messages from the communication session and/or the seller. In response to detecting the scam content, the host platform 230 may block the seller. As another example, in case of an uncertain decision (*e.g.,* 50% on the scale) the algorithm supports accumulation of evidence and can put users in a "soft block" state which minimizes their interaction with other users (but does not necessarily block it entirely) until a clear decision can be made.

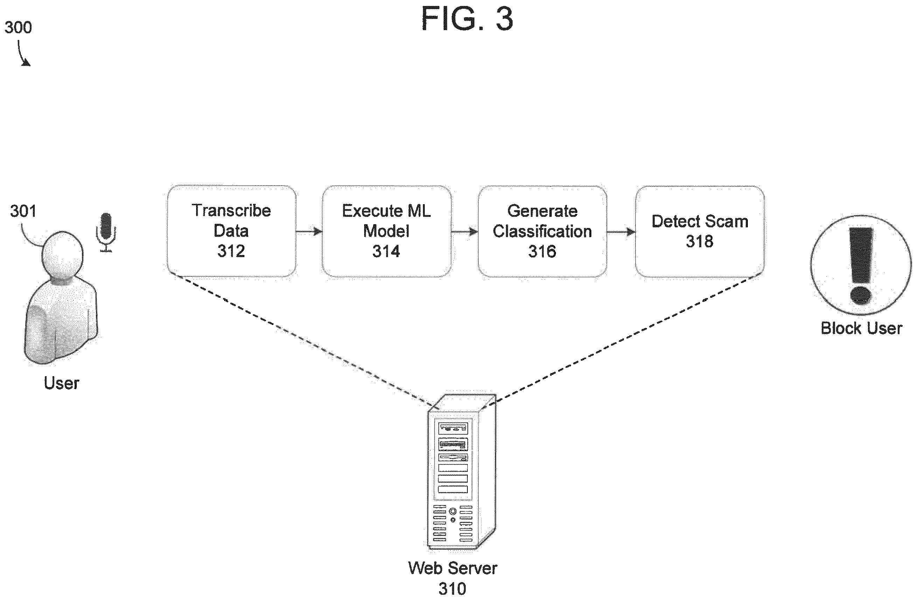

FIG. 3 illustrates a fraud detection process 300 performed by a web server 310 in accordance with an example embodiment. For example, the web server 310 may be a host of a chat application in which multiple users are communicating via voice notes which are transcribed into instant messages or other forms of text content. The web server 310 may include a standalone server, a cloud environment, a distributed environment, and the like. In this example, fraudulent content (*e.g.*, offers, items for sale, payment requests, etc.) may be included within speech input by a user 301 into a user device (not shown) which is transmitted to the web server 310.

In the example of FIG. 3, the web server 310 receives audio data from a user device of user 301. For example, the audio data may be speech input to a mobile application executing on the user's device. In 312, the web server 310 may transcribe the audio data into text and store the text in a file such as a document, spreadsheet, notepad, word processor file, and the like. The transcribed data 312 may include one or more words, phrases, sentences, and the like, which include alphanumeric characters including letters, numbers, symbols, spacing, and the like, which are based on speech included within the audio data. The text data may be generated by a speech-to-text converter, or the like. As another example, the audio file may be stored as an audio that is not converted to text.

In 314, the web server 310 may execute one or more machine learning algorithms on the speech content such as the transcribed data or the audio file. The machine learning algorithm may receive the speech content as input and generate a classification of the speech content, in 316. According to various embodiments, the machine learning algorithm may be trained based on historical fraudulent speech content which has been transcribed into text content and analyzed via a neural network including classification algorithms. As another example, the neural network may be trained on audio files or audio content to detect patterns of speech within the audio which correspond to fraudulent content. In some embodiments, the machine learning algorithm may be trained based on text messages which include fraudulent content.

The classification performed in 316 may include providing a rating or a score for the content based on a sliding scale. For example, the rating may be a rating between a lowest rating of a very low likelihood of fraudulent content to a highest rating of a very high likelihood of fraudulent content, and other stages of ratings in between. Based on the rating classification, in 318 the web server 310 may determine that the transcribed content includes a scam, or fraudulent content of some kind. In response, the web server 310 may block the user 301 from submitting content to other users via the chat application hosted by the web server 310.

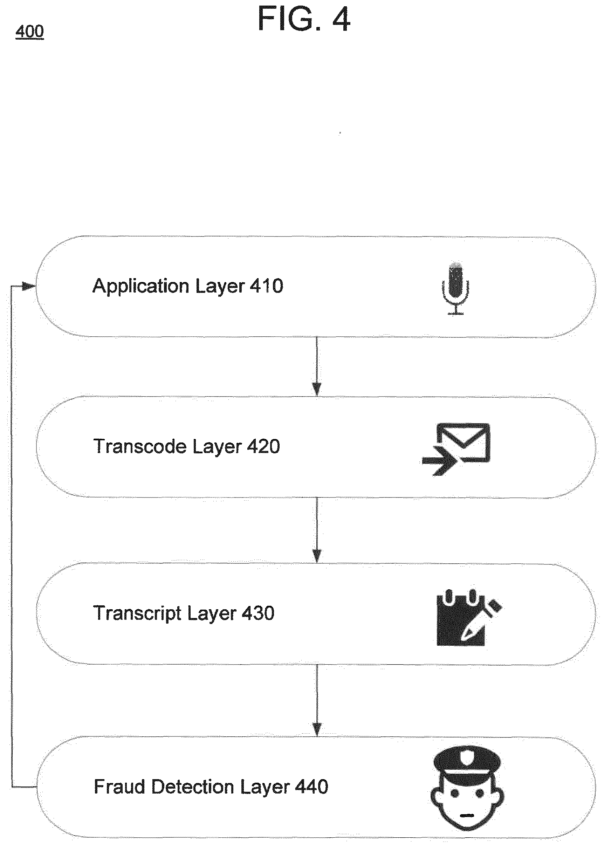

FIG. 4 illustrates a fraud detection application architecture 400 in accordance with an example embodiment. Referring to FIG. 4, the architecture 400 includes an application layer 410, a transcode layer 420, a transcript layer 430, and a fraud detection layer 440. As an example, the application layer 410 may be included on a user device where the speech is detected. In some embodiments, the application layer 410 may also be included on the host platform (*e.g*., web server, cloud platform, etc.) that hosts the application on the user device. Likewise, the transcode layer 420 and the transcript layer 430 may be included on the user device, the host platform, or both the user device and the host platform. The fraud detection layer 440 may be included within the host platform.

The application layer 410 may receive the audio data that is input to the user device and store the audio data as an audio file. The application layer 410 may encode the audio file and send it to the transcode layer 420. The transcode layer 420 may transcode the audio file into one of various formats required by a transcription service and send the transcoded audio file to the transcript layer 430. For example, the transcoding may be a direct digital-to-digital conversion of the encoded audio file to another. The transcoding may be performed in cases where a target device (or workflow) does not support a format or has limited storage capacity that mandates a reduced file size, or to convert incompatible or obsolete data to a better-supported or modern format.

The transcript layer 430 may transcribe the transcoded audio file into text. For example, the transcript layer 430 may select different converters based on language within the audio and may send the text to the fraud detection layer 440. The fraud detection layer 440 may execute the machine learning model and decide whether a nature of the speech (as evidenced by the text) is fraudulent in nature. In the case of fraud being detected, the fraud detection layer 440 may transmit an instruction to the application layer 410 for blocking additional speech from being submitted by the user through the application.

The fraud detection layer 440 may run the machine learning model which may be trained on normal text messages (or instant message) and transcribed text messages which are speech converted to text. The training may be performed on both normal (non-fraudulent messages) and fraudulent-based messages which are associated with a scam. The model may be unbiased in that it is not looking for a specific keyword, but rather a pattern of communication that has been previously identified as fraudulent.

In some cases, users may be marked as suspicious which can furthers influence the model's decision making. Furthermore, blocked users may be put in an application phase (referred to as jail, etc.) where the users can still send messages that are not delivered to other people and instead only used to further train the fraud models. In cases where speech content is not clearly "fraud" or "not fraud", users are presented with an option to mark conversations as suspicious. The input of "suspicious" or "not suspicious" may also used to train the model. Also, the model may be further trained based on a dynamic threshold for fraud as well as random sampling.

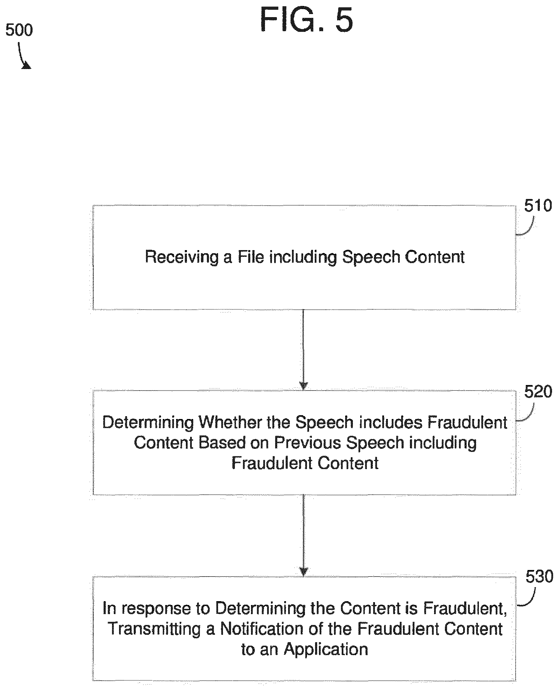

FIG. 5 illustrates a method 500 for determining that speech input via a chat application includes fraudulent content, in accordance with example embodiments. For example, the method 500 may be performed by a web server, a host platform, a cloud platform, a database, and/or the like. In some embodiments, the method may be performed by a host server of a mobile application, however, embodiments are not limited thereto. Referring to FIG. 5, in 510, the method may include receiving a file that includes speech content such as an audio file or a text file that has been generated by transcribing speech content into text. For example, the speech may be input by a user vocalizing content to a microphone or other audio component of a user device such as a mobile phone, a tablet, a computer, an appliance, a television, or the like.

The user device may include a chat application which converts the speech into voice notes or other text messages which can be sent to another user through a chat window. As another example, the file could be an audio file. In some embodiments, the input may be related to the posting of an item via a website such as the buying and/or selling of an item via a second-hand goods online marketplace, but embodiments are not limited thereto. In some embodiments, the speech may be received during a communication session between the user device and another user device. In some embodiments, the speech may be converted, transcribed, or the like, into text based on a speech-to-text converter. The speech-to-text conversion may be performed by the user device and/or a host platform such as a web server which hosts the chat application.

In 520, the method may include determining whether the speech includes fraudulent content based on the content within the file. For example, the determining may be performed by a machine learning algorithm which learns from previous audio files including fraudulent content and/or text files including transcribed speech identified as fraudulent content. For example, the determining may identify a word or a sentence within the audio or the transcribed speech that appears fraudulent. In some embodiments, the machine learning algorithm may analyze the speech and provide a score or other classification rating or label. In this example, when the score or label meets or exceeds a threshold level, the speech may be determined as having fraudulent content.

For example, in some embodiments a neural network algorithm (e.g., a recurrent neural network, possibly with attention mechanisms) can be used to perform natural language processing and determine if the transcribed message (or audio file) includes content/text that is suspicious and correlated with fraudulent behavior, such as trying to move the conversation outside of the host platform, requesting payment upfront, proposing dodgy locations for conducting the transaction, and the like. In addition, in certain embodiments another machine learning model that performs named entity recognition (NER) can be used to detect a price requested for a given item, since requesting an abnormally low price is a known method for attracting behavior often used for fraudulent purposes. This NER model can be either a pre-trained model or it can use a pre-trained model as a basis and can be fine-tuned with historical data. The output of these models may feed a rule based system or another machine learning model that uses this information (e.g., confidence scores for the item being significantly underpriced or for the user trying to move the conversation out of the host platform) as "features" in order to make the final prediction if the message is fraudulent or not.

In some embodiments, the determining may further be performed (or instead) based on text messages that have been determined as fraudulent content. According to various aspects, the speech may be received during a communication session between the user device and another user device, and the determining may further be performed based on speech previously received from the user device during the same communication session with the other user device. Here, the fraud detection may be incrementally detected based on a chain of messages between seller and buyer, or the like. In some embodiments, the determining may further be performed based on historical user behavior with respect to the application on the user device. For example, other interactions of the user on the online marketplace may be considered when determining whether content is fraudulent.

In 530, the method may include, in response to determining that the speech comprises fraudulent content, transmitting a notification to the application indicating the fraudulent content. In some embodiments, the notification may further include blocking additional speech input via the application on the user device from being transmitted to another user device in response to determining the speech comprises fraudulent content. As another example, the method may include putting the user device in a soft-lock or detention area in which the user device or user account is labeled as suspicious and monitoring additional speech input via the user device for fraudulent content is continued. In some embodiments, a user account detected as fraudulent may not be notified. In this way, the system herein may continue to receive input from the fraudulent user and continue to learn from the fraudulent content to further train the machine learning algorithm.

The above embodiments may be implemented in hardware, in a computer program executed by a processor, in firmware, or in a combination of the above. A computer program or computer program product may be embodied on a computer readable medium, such as a storage medium or storage device. For example, a computer program may reside in random access memory ("RAM"), flash memory, read-only memory ("ROM"), erasable programmable read-only memory ("EPROM"), electrically erasable programmable read-only memory ("EEPROM"), registers, hard disk, a removable disk, a compact disk read-only memory ("CD-ROM"), or any other form of storage medium known in the art.

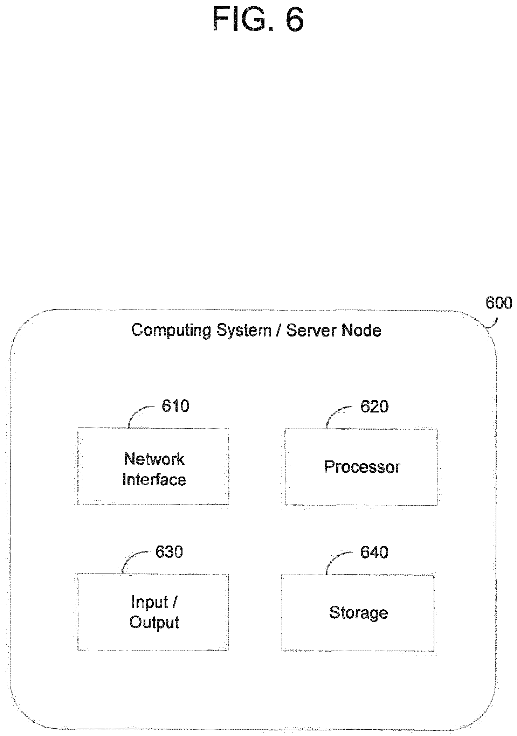

A storage medium may be coupled to the processor such that the processor may read information from, and write information to, the storage medium. In an alternative, the storage medium may be integral to the processor. The processor and the storage medium may reside in an application specific integrated circuit ("ASIC"). In an alternative, the processor and the storage medium may reside as discrete components. For example, FIG. 6 illustrates an example computer system 600 which may represent or be integrated in any of the above-described components, etc. FIG. 6 is not intended to suggest any limitation as to the scope of use or functionality of embodiments of the application described herein. The computing system 600 is capable of being implemented and/or performing any of the functionality set forth hereinabove.

The computing system 600 may include a computer system/server, which is operational with numerous other general purpose or special purpose computing system environments or configurations. Examples of well-known computing systems, environments, and/or configurations that may be suitable for use as computing system 600 include, but are not limited to, personal computer systems, cloud platforms, server computer systems, thin clients, thick clients, hand-held or laptop devices, tablets, smart phones, databases, multiprocessor systems, microprocessor-based systems, set top boxes, programmable consumer electronics, network PCs, minicomputer systems, mainframe computer systems, distributed cloud computing environments, and the like, which may include any of the above systems or devices, and the like. According to various embodiments described herein, the computing system 600 may be a web server.

The computing system 600 may be described in the general context of computer system-executable instructions, such as program modules, being executed by a computer system. Generally, program modules may include routines, programs, objects, components, logic, data structures, and so on that perform particular tasks or implement particular abstract data types. The computing system 600 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 6, the computing system 600 is shown in the form of a general-purpose computing device. The components of computing system 600 may include, but are not limited to, a network interface 610, one or more processors or processing units 620, an input / output 630 which may include a port, an interface, etc., or other hardware, for inputting and/or outputting a data signal from / to another device such as a display, a printer, etc., and a storage device 640 which may include a system memory, or the like. Although not shown, the computing system 600 may also include a system bus that couples various system components including system memory to the processor 620. In some embodiments, the input / output 630 may also include a network interface.

The storage 640 may include a variety of computer system readable media. Such media may be any available media that is accessible by computer system/server, and it may include both volatile and non-volatile media, removable and non-removable media. System memory, in one embodiment, implements the flow diagrams of the other figures. The system memory can include computer system readable media in the form of volatile memory, such as random access memory (RAM) and/or cache memory. As another example, storage device 640 can read and write to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to the bus by one or more data media interfaces. As will be further depicted and described below, storage device 640 may include at least one program product having a set (e.g., at least one) of program modules that are configured to carry out the functions of various embodiments of the application.

According to various embodiments, the processor 620 may receive a file that includes speech content based on speech input via an application executing on a user device. Here, the file may be generated locally at the computing device by recording audio to generate an audio file, converting audio to text, or it may be converted by and received from another device via the network interface 610. The processor 620 may determine whether the speech includes fraudulent content based on the content within the file. In this example, the determination may be performed based on previous speech such as audio or transcribed speech that has been identified as fraudulent content. Furthermore, in response to determining that the speech comprises fraudulent content, the processor 620 may control the network interface 610 to transmit a notification to the application indicating the fraudulent content.

The fraud detection may be performed by a machine learning algorithm that is stored within the storage device 640 and which is trained based on previously identified fraudulent content such as audio and/or transcribed speech and text messages which include fraud. The machine learning algorithm may be dynamic in that it continues to learn from additional audio and/or transcribed speech.

In some embodiments, the speech may be extracted by the processor 620 from a communication between the user device and another user device. In some embodiments, the processor 620 may block additional speech input via the application on the user device from being transmitted to another user device in response to determining the speech comprises fraudulent content. For example, the processor 620 may control the network interface 610 to transmit a blocking signal to a chat application on the user device where the speech was input, thereby preventing the application from transmitting text other user devices. In some embodiments, the speech content may be associated with a posting on a website.

In some embodiments, the processor 620 may label the user device as suspicious and monitor additional speech input via the user device for fraudulent content. In some embodiments, the processor 620 may determine whether the speech comprises fraudulent content based on text messages that have been determined as fraudulent content. In some embodiments, the speech may be received from or during a communication session between the user device and another user device, and the processor 620 may determine whether the speech comprises fraudulent content based on speech previously received from the user device during the communication session with the other user device. In some embodiments, the processor 620 may determine whether the speech comprises fraudulent content based on historical user behavior with respect to the application on the user device.

As will be appreciated by one skilled in the art, aspects of the present application may be embodied as a system, method, or computer program product. Accordingly, aspects of the present application may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present application may take the form of a computer program product embodied in one or more computer readable medium(s) having computer readable program code embodied thereon.

Although not shown, the computing system 600 may also communicate with one or more external devices such as a keyboard, a pointing device, a display, etc.; one or more devices that enable a user to interact with computer system/server; and/or any devices (e.g., network card, modem, etc.) that enable computing system 600 to communicate with one or more other computing devices. Such communication can occur via I/O interfaces. Still yet, computing system 600 can communicate with one or more networks such as a local area network (LAN), a general wide area network (WAN), and/or a public network (e.g., the Internet) via network interface 610. As depicted, network interface 610 may also include a network adapter that communicates with the other components of computing system 600 via a bus. Although not shown, other hardware and/or software components could be used in conjunction with the computing system 600. Examples include, but are not limited to: microcode, device drivers, redundant processing units, external disk drive arrays, RAID systems, tape drives, and data archival storage systems, etc.

Accordingly, there particularly is disclosed a computer program product specifically embodied as a non-transitory computer readable medium comprising program instructions which when executed cause a computer to perform a method comprising: receiving a file comprising content based on speech input via an application executing on a user device; determining whether the speech comprises fraudulent content based on the content within the file, the determining being performed based on previous speech that has been determined as fraudulent content; and in response to determining that the speech comprises fraudulent content, transmitting a notification to the application indicating the fraudulent content.

Particularly, the method further comprises blocking additional speech input via the application on the user device from being transmitted to another user device in response to determining the speech comprises fraudulent content.

It will be readily understood that descriptions and examples herein, as generally described and illustrated in the figures, may be arranged and designed in a wide variety of different configurations. Thus, the detailed description of the embodiments is not intended to limit the scope of the application as claimed but is merely representative of selected embodiments of the application. One of ordinary skill in the art will readily understand that the above may be practiced with steps in a different order, and/or with hardware elements in configurations that are different than those which are disclosed. Therefore, although the application has been described based upon some preferred embodiments, it would be apparent to those of skill in the art that certain modifications, variations, and alternative constructions would be apparent.

## Claims

1. A computing system comprising:
a network interface; and
a processor configured to receive a file comprising content based on speech input via an application executing on a user device, and determine whether the speech comprises fraudulent content based on the content within the file, the determination being performed based on previous speech that has been determined as an indicator of fraudulent content,
wherein, in response to determining that the speech comprises fraudulent content, the processor is further configured to control the network interface to transmit a notification to the application indicating the fraudulent content has been detected.

2. The computing system of claim 1, wherein the processor is further configured to transcribe the speech into a text file and determine whether the speech comprises fraudulent content based on transcribed text content within the text file; and/or
wherein the speech is extracted from a communication between the user device and another user device.

3. The computing system of any one of the preceding claims, wherein the processor is further configured to block additional speech input via the application on the user device from being transmitted to another user device in response to determining the speech comprises fraudulent content.

4. The computing system of any one of the preceding claims, wherein the processor is further configured to label the user device as suspicious and monitor additional speech input via the user device for fraudulent content; and/or
wherein content of the speech is associated with a posting on a website.

5. The computing system of any one of the preceding claims, wherein the processor is further configured to determine whether the speech comprises fraudulent content based on text messages that have been determined as fraudulent content.

6. The computing system of any one of the preceding claims, wherein the speech is received during a communication session between the user device and another user device, and the processor is further configured to determine whether the speech comprises fraudulent content based on speech previously received from the user device during the communication session with the other user device.

7. The computing system of any one of the preceding claims, wherein the processor is further configured to determine whether the speech comprises fraudulent content based on historical user behavior with respect to the application on the user device.

8. A method comprising:
receiving a file comprising content based on speech input via an application executing on a user device;
determining whether the speech comprises fraudulent content based on the content within the file, the determining being performed based on previous speech that has been determined as fraudulent content; and
in response to determining that the speech comprises fraudulent content, transmitting a notification to the application indicating the fraudulent content.

9. The method of claim 8, further comprising transcribing the speech into a text file and determining whether the speech comprises fraudulent content based on transcribed text content within the text file; and/or
wherein the speech is extracted from a communication between the user device and another user device.

10. The method of claim 8 or 9, further comprising blocking additional speech input via the application on the user device from being transmitted to another user device in response to determining the speech comprises fraudulent content.

11. The method of any one of the preceding claims 8 to 10, further comprising labeling the user device as suspicious and monitoring additional speech input via the user device for fraudulent content.

12. The method of any one of the preceding claims 8 to 11, wherein content of the speech is associated with a posting on a website; and/or
wherein the determining is further performed based on text messages that have been determined as fraudulent content.

13. The method of any one of the preceding claims 8 to 12, wherein the speech is received during a communication session between the user device and another user device, and the determining is further performed based on speech previously received from the user device during the communication session with the other user device.

14. The method of any one of the preceding claims 8 to 13, wherein the determining is further performed based on historical user behavior with respect to the application on the user device.

15. A computer program product comprising computer-readable instructions which, when loaded and executed on a suitably system perform the steps of a method according to any one of the preceding claims 8 to 14.
